# EUROPEAN PATENT SPECIFICATION

(11) **EP 0 419 295 B1**
(45) Date of publication and mention of the grant of the patent: **11.12.1996**
(21) Application number: 90310400.8
(22) Date of filing: 21.09.1990
(51) Int. Cl.: G11B 7/24, G11B 11/10

(54) **Optical memory device**
Optischer Speicher
Dispositif de mémorisation optique

(30) Priority: 22.09.1989 JP 246992/89
(43) Date of publication of application: 27.03.1991
(73) Proprietor: SHARP KABUSHIKI KAISHA, Osaka 545 (JP)
(72) Inventor: Van, Kazuo, Nara-shi, Nara-ken (JP); Fujita, Takao, Shiki-gun, Nara-ken (JP); Ohta, Kenji, Kitakatsuragi-gun, Nara-ken (JP)
(74) Representative: Brown, Kenneth Richard

(56) References cited:
- EP-A- 0 321 704
- EP-A- 0 330 197
- PATENT ABSTRACTS OF JAPAN vol. 11, no. 121 (P-568)16 April 1987 & JP-A-61 267 947
- PATENT ABSTRACTS OF JAPAN vol. 11, no. 107 (P-563)4 April 1987 & JP-A-61 255 542
- PATENT ABSTRACTS OF JAPAN vol. 6, no. 233 (P-156)19 November 1982 & JP-A-57 133 532
- PATENT ABSTRACTS OF JAPAN vol. 10, no. 116 (P-452)30 April 1986 & JP-A-60 243 835

## Description

### BACKGROUND OF THE INVENTION

### 1. Field of the Invention

The present invention relates to an optical memory device which is capable of optically recording or reproducing information or optically erasing recorded information, suitable for use with various optical disk systems, opto-magnetic systems and optical cards.

### 2. Description of the Related Art

Optical memory devices with high storage density and large storage capacity, represented by optical disks and opto-magnetic disks, are finding a spreading use in the current information-oriented societies. This has given rise to the demand for development of optical memory devices which can reliably serve as information mediums.

To cope with such a demand, a so-called both-face type optical memory device, having a high storage density and large storage capacity, has been proposed in, for example, JP-A-56-169238. This known optical memory device has a pair of units each including a light-transmissive substrate such as of glass or polycarbonate and an optical memory medium layer formed on the substrate, the units being bonded together through a bonding layer such that the optical memory medium layers of both units face each other across the bonding layer.

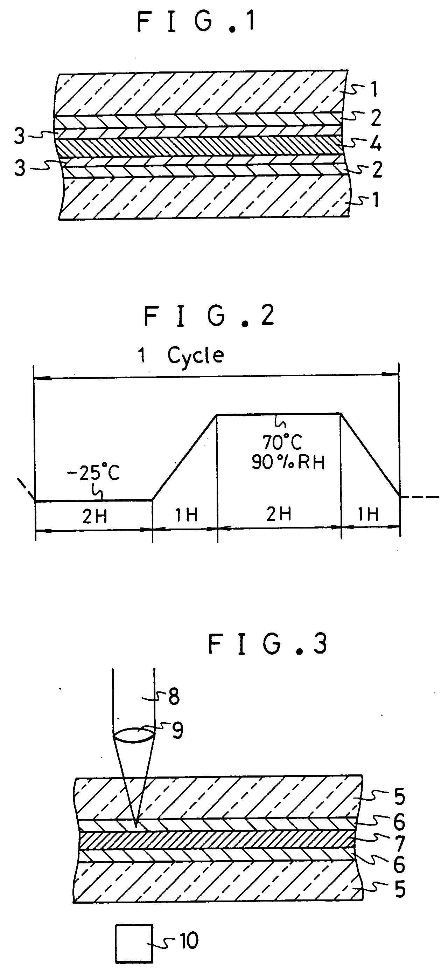

A description will now be given of a both-face type opto-magnetic disk device with a rewritable optical recording medium, with specific reference to Fig. 3, by way of example.

Pits of the pre-formatting portion of the disk for enabling writing and reading of information, as well as grooves for enabling tracking of a laser light, are formed on one side of a light-transmissive substrate 5. An optical memory medium layer 6, which is composed of a dielectric film, magnetic film and a reflective film formed in the mentioned sequence by sputtering or evaporation, is formed on the surface of the light-transmissive substrate 5 having the pits and grooves.

The magnetic film has an axis of easy magnetization perpendicular to the surface of the film. Information is recorded in the magnetic film by means of a laser light. Reproduction of recorded information, as well as erasure of the information, is also possible by means of a laser light. The dielectric film and the reflective film are used for the purpose of protecting the magnetic film and also for enhancing magneto-optical effect. A pair of units, each having the light-transmissive substrate 5 and the optical memory medium layer 6, are bonded together through a bonding layer 7 such that the optical memory medium layers face each other across the bonding layer 7. Conventionally, an ultraviolet curing adhesive or a hot-melt adhesive is used as the adhesive which forms the bonding layer 7. In some cases, a hard coat layer of, for example, an ultraviolet curing resin, is formed on the optical memory medium layer 6 prior to the application of the adhesive, in order to protect the optical memory medium layer and to improve moisture-proof nature. Thus, the hard coat layer is formed between the bonding layer 7 and each optical memory medium layer 6.

When this both-face type opto-magnetic disk is used for the purpose of recording information, the magnetic film is beforehand magnetized in one direction and a magnetic field of the polarity opposite to that of the magnetization of the magnetic film is applied by means of an external magnet 10. In this state, a laser light 8 is focused onto the magnetic film across the light-transmissive substrate 5, through an objective lens 9. The temperature of the magnetic film is therefore raised at the local point irradiated with the laser light 8. When the temperature reaches a level near the Curie point where the magnetization extinguishes, the direction of magnetization of the heated portion of the magnetic film is inverted in conformity with the direction of the magnetic field of the external magnet. It is thus possible to form spot magnetic sections of a very small size, e.g., less than 10 µm, whereby information is recorded at a high density of 10⁵ bit/mm².

In the opto-magnetic disk having the optical memory medium described above, a large quantity of information is destroyed when a defect of sub-millimeter order is produced in the optical memory device, with the result that such information can no more be reproduced or the quality of the reproduction signals is impaired. Such a defect of sub-millimeter order tends to occur as a pin-hole or exfoliation at interfaces of the adjacent layers during a long use of the disk. This problem tends to occur particularly when the light-transmissive substrate is made of a material which is liable to exhibit a thermal distortion or a strain due to stress, such as polycarbonate, polymethyl methacrylate or the like resin.

Thus, in the field of industry concerned, it is a critical problem that the life and reliability of optical memory devices are impaired due to generation of defects such as pin-holes or exfoliation.

### SUMMARY OF THE INVENTION

Accordingly, an object of the present invention is to suppress generation of defects such as pin-holes, thereby attaining a longer life and high reliability of the optical memory device.

According to the present invention, as defined by claim 1, there is provided an optical memory device comprising a pair of optical memory elements bonded together face-to-face with a bonding layer, each element comprising a light-transmissive substrate and an optical memory layer on the substrate, said elements being disposed with said memory layers between the bonding layer and the respective substrates, wherein the bonding layer comprises a silicone rubber, the device further comprising respective hard coat layers between the bonding layer and the respective optical memory layers.

In this optical memory device, generation of defects such as pin-holes and exfoliation is remarkably suppressed to ensure longer life and higher reliability of the optical memory device.

According to a shelving test in which optical disks embodying the optical memory devices of the invention were left for a long time in an environment of high temperature and humidity, as well as a reliability test in which the optical disks were subjected to a cyclic change in temperature and humidity, no substantial change in the appearance of the disks was observed although very few pin-holes were recognized after these tests, thus proving the extended life and improved reliability of the optical memory device of the invention.

These advantageous effects are attributable to the use of the silicone rubber which is known as a sealing material in place of conventionally used ordinary adhesives, and the hard coat layer formed between the silicone rubber of the bonding layer and each optical memory layer, which eliminates any unfavorable effect which may otherwise be caused by the uncured liquid of the silicone rubber on the optical memory layer during the bonding by the silicone rubber. In addition, the hard coat layer prevents invasion of moisture into the optical memory layer which tends to occur due to rather high moisture-permeability exhibited by the silicone rubber.

The preamble of claim 1 reflects the state of the art according to JP-A-61-255542. It is moreover known from EP-A-0 321 704 to use a hard coat layer to protect the recording layer from deterioration due to humidity and heat.

### BRIEF DESCRIPTION OF THE DRAWINGS

Fig. 1 is a vertical sectional view of an embodiment of the optical memory device of the present invention;
Fig. 2 is an illustration of environmental conditions of a reliability test conducted for evaluating the reliability of the embodiment; and
Fig. 3 is an illustration of an opto-magnetic disk as a known optical memory device in a state in which information is being recorded in the disk.

### DESCRIPTION OF THE PREFERRED EMBODIMENTS

The light-transmissive substrate used in the optical memory device of the present invention may have pits and/or grooves and is made of a light-transmissive material such as a glass or a light-transmissive resin such as polycarbonate and polymethyl methacrylate, among which a light-transmissive resin is preferred because the advantages of the invention are fully exerted when this type of material is used.

In the optical memory device of the invention, an optical memory medium layer is formed on the light-transmissive substrate. Preferably, a medium which can record information by opto-magnetic effect is utilized as the material of the optical memory medium layer. Such an opto-magnetic memory medium layer may have a multi-layered structure including a dielectric film, a magnetic film and a reflective film. For instance, the opto-magnetic layer can be prepared by forming, on the substrate, a dielectric film, a magnetic film, a dielectric film and a reflective film or a dielectric film, a magnetic film and a reflective film in the mentioned sequence. These films of the multi-layered film may be produced from materials which are known in this field of industry. For instance, metal nitrides or oxides such as AℓN, SiN and SiO₂ can be used as the material of the dielectric film. As the material of the magnetic film, single film or composite films of a rare earth-transition metal alloy such as GdTbFe, GdTbFeCo and so forth can be used. The reflective film may be made of Aℓ, Au, Cu, Ni and Pt. These films can be formed by a known method such as sputtering, PVD, CVD and so forth.

Prior to the bonding of the pair of elements each having the light-transmissive substrate and the optical memory medium layer as described, the surface of the optical memory medium is coated with a layer of cured resin layer (referred to also as "hard coat layer"). Any known cured resin layer for protecting optical memory medium can be used as the hard coat layer. In particular, it is preferred to use an ultraviolet curing resin. For instance, the hard coat layer can be formed easily by applying an acrylate type ultraviolet curing resin on the surface of the optical memory medium layer and then curing the resin by an exposure to ultraviolet rays. Preferably, the thickness of the hard coat layer ranges between several to several tens of microns.

The bonding between the pair of elements is conducted by means of a silicone rubber. Various types of silicone rubbers such as of room temperature curing type, thermosetting type and ultraviolet curing type, having a main chain constituted by polyorganosiloxane, can be used as the silicone rubber for bonding the pair of elements. Among these silicone rubbers, a silicone rubber of room-temperature curing type is preferable. Various types of room-temperature curing silicone rubber are usable. For instance, a silicone rubber of single-liquid type, two-liquid type, condensation reaction type or addition reaction type can be used suitably. Among these silicone rubbers, a single-liquid type silicone rubber which can be set (vulcanized) by dealcoholation reaction is used most suitably. The silicone rubber may be a commercially available silicone rubber composition containing various additives as required such as a filler (silica and or calcium carbonate), cross-liner (polyfunctional silane compound), curing catalyst, thermal stabilizer and so forth.

The bonding of two elements to each other may be conducted by a series of steps including applying the above-mentioned silicone rubber (uncured) to the hard coat layer of one of the elements by, for example, dripping or spinning, superposing the other element such that the hard coat layer of this element faces the hard coat layer of the first-mentioned element, and subjecting the stack of the elements to a condition for enabling the silicone rubber to be cured (vulcanized). The conditions of curing are determined in accordance with the curing characteristics of the silicone rubber used. For instance, when the above-mentioned single-liquid room-temperature curing type silicone rubber is used, the curing is conducted by leaving the stack of the elements in a humid air of 60°C or so for a period of several hours to several days. Preferably, the thickness of the bonding layer of the silicone rubber is set to be 10 µm to 150 µm in the state after the curing.

An optical memory device of the present invention having a pair of elements, each having a light-transmissive substrate and an optical memory medium layer, is obtained as a result of the bonding.

### Example

An example of the optical memory device of the present invention will be described with reference to Figs. 1 and 2.

As shown in Fig. 1, an optical memory medium layer 2 composed of a dielectric film, a magnetic film and a reflective film was formed by sputtering on one of the surfaces of the light-transmissive substrate 1 which was made of polycarbonate. The light-transmissive substrate was 1.2 mm in thickness and 3.5 inches in diameter. The optical memory medium layer was formed by successively laminating four layers: namely, an AℓN film of 80 nm, GdTbFe film of 20 nm, AℓN film of 25 nm and Aℓ film of 50 nm. A hard coat layer 3 was formed on the surface of the optical memory medium layer 2 opposite to the light- transmissive substrate 1, by applying an acrylic hard coat agent and then curing the hard coat agent by irradiation with ultraviolet rays. The hard coat agent used in this embodiment was an ultraviolet curing resin or urethane acrylate type (commercial name SD301, produced by Dai Nippon Ink Kabushiki kaisha).

Two such elements, each having the light-transmissive substrate 1, an optical memory medium layer 2 and the hard coat layer 3 which were laminated in the mentioned order, were prepared and were superposed on each other through the intermediary of a bonding layer 4 of a room-temperature curing silicone rubber of single-liquid type, such that the hard coat layers 3, 3 of both elements oppose each other across the bonding layer 4. The bonding layer 4 was then cured in an environment of high temperature and humidity, whereby two elements were integrated to provide a both-face type optical memory device having a first light-transmissive substrate 1, a first optical memory medium layer 2, a first hard coat layer 3, the bonding layer 4, a second hard coat layer 3, a second optical memory medium layer 2 and a second light-transmissive substrate 1.

In this embodiment, a dealcoholation condensation type silicone rubber (commercial name Toray Silicone SE9175L PTV, produced by Toray Silicone Kabushiki Kaisha) was used as the above-mentioned room-temperature curing single-liquid type silicone rubber. This silicone rubber was applied by dripping to the surface of the hard coat layer of one of the elements and was left for 2 days in an environment of 60°C and 80% relative humidity, whereby the silicone rubber was cured to integrate the two elements.

Opto-magnetic disks each comprising the optical memory device of Fig. 1 were subjected to two kinds of reliability test conducted by placing the disks for long time in specified conditions. The results of these tests are shown in Table 1.

More specifically, a first type of reliability test was conducted by examining the appearances of the disks after leaving these disks for 240 hours in an atmosphere of 80°C and 90% relative humidity.

The second reliability test was conducted by subjecting the disks to cyclic changes in temperature and humidity, and the appearances of the disks after experiencing the cyclic changes were examined as in the first reliability test. More specifically, each cycle has a period of 6 hours, including the steps of holding each disk for 2 hours at -25°C, raising temperature and humidity to 70°C and 90% relative humidity in 1 hour, keeping the disk at these temperature and humidity levels for 2 hours, and cooling the disk again down to -25°C in 1 hour. This cycle was repeated 48 times so that the total test time was 288 hours.

As explained before, this example of the optical memory device was fabricated by using a single-liquid type room-temperature curing silicone rubber as the bonding material. For the purpose of comparison, optical disks as comparison examples 1 and 2 were fabricated with the same materials and constructions as the example, except that the above-mentioned silicone rubber was replaced with a commercially available acrylic ultraviolet curing adhesive (commercial name UV734A, produced by Ohsaka Yuki Kagaku Kabushiki Kaisha) and a commercially available polyester hot-melt adhesive (this may be replaced with EVA adhesive or polyamide adhesive), in comparison examples 1 and 2, respectively. The disks of comparison examples 1 and 2 were subjected to the same reliability test as those executed on the example of the optical memory device of the invention, and the results are also shown in Table 1.

As will be seen from Table 1, the optical memory devices of comparison examples 1 and 2, produced by using ordinary acrylic ultraviolet curing adhesive and an ordinary hot-melt adhesive, respectively, exhibited defects such as separation of the optical memory medium layer 2 from the light-transmissive substrate 1 or cracking of the optical memory medium layer with many pin-holes. In contrast, the example of the optical memory device of the

**Table 1**

| | | Reliability test 1 | Reliability test 2 |
|---|---|---|---|
| | Type of bonding material | 240-hour placing at 80°C, 90% RH | Subjecting to 48 cycles of temperature and humidity change |
| Example | silicone rubber | 1 to 2 pin-holes, no change in appearance | 1 to 2 pin-holes, no change in appearance |
| Comp. Ex. 1 | acrylic ultraviolet curing | Many pin-holes. Medium layer came off substrate. | Many pin-holes. Medium layer came off substrate. |
| Comp. Ex. 2 | Hot-melt adhesive | Many pin-holes. Crack generated in memory medium. | Many pin-holes. Crack generated in memory medium. |

present invention does not show any change in the appearance, although very few pin-holes, i.e., 1 to 2, were observed, thus proving prolonged life and improved reliability.

This advantageous effect of the present invention is attributed to the following facts.

Firstly, it is to be noted that the silicone rubber of the bonding layer effectively absorbs any stress which is produced by a thermal distortion or due to internal stress and which acts on the interface between the bonding layer and the optical memory medium layer or between the bonding layer and the hard coat layer. consequently, generation of defects such as pin-holes and separation of the layers is remarkably suppressed.

Secondly, the hard coat layer effectively eliminates any unfavorable effect of the silicone rubber on the optical memory medium layer during bonding with the liquid state silicone rubber and during curing of the silicone rubber.

As has been described, according to the present invention, the closeness of contact between the optical memory medium layer and the light-transmissive substrate, so that troubles such as separation or cracking of the optical memory medium layer are eliminated even when the device is used under a severe condition including repeated change in temperature and humidity. Furthermore, since the number of pin-holes is negligibly small, the quality of signals is remarkably improved. It is thus possible to obtain an optical memory device having extended life and improved reliability.

## Claims

1. An optical memory device comprising a pair of optical memory elements bonded together face-to-face with a bonding layer (4), each element comprising a light-transmissive substrate (1) and an optical memory layer (2) on the substrate, said elements being disposed with said memory layers (2) between the bonding layer (4) and the respective substrates (1), wherein the bonding layer (4) comprises a silicone rubber, characterised in that the device further comprises respective hard coat layers (3) between the bonding layer (4) and the respective optical memory layers (2).

2. An optical memory device according to claim 1, wherein the silicone rubber is a cured one of room temperature-curing type, thermosetting type or ultraviolet-curing type.

3. An optical memory device according to claim 1 or claim 2, wherein the bonding layer (4) has a thickness of 10 µm to 150 µm.

4. An optical memory device according to any of claims 1 to 3, wherein the hard coat layer comprises a cured resin layer (3).

5. An optical memory device according to claim 4, wherein the cured resin layer (3) is made from an ultraviolet-curing resin.

6. An optical memory device according to claim 5, wherein the ultraviolet-curing resin is of an acrylate type.

7. An optical memory device according to any of claims 4 to 6, wherein the cured resin layer (3) has a thickness of several to several tens of microns.

8. An optical memory device according to any preceding claim, wherein the optical memory layer (2) has a multi-layered structure comprising a dielectric film, a magnetic film and a reflective film.

9. An optical memory device according to any preceding claim, wherein the light-transmissive substrate (1) is made of a light-transmissive resin.

10. An optical memory device according to any preceding claim, wherein the silicone rubber is a room temperature-curing silicone rubber of a dealcoholation condensation type.

## Patentansprüche

1. Optische Speichereinrichtung mit einem Paar von optischen Speicherelementen, die gegenüberliegend zu einer Bondschicht (4) gebondet sind, wobei jedes Element ein lichtdurchlässiges Substrat (1) enthält, und eine optische Speichereschicht (2) auf dem Substrat, und die Elemente mit den Speicherschichten (2) zwischen der Bondschicht (4) und den zugeordneten Substraten (1) angeodnet sind und die Bondschicht (4) einen Silikongummi enthält,
dadurch **gekennzeichnet**, daß
die Einrichtung ferner zugeordnete harte Belagschichten (3) zwischen der Bondschicht (4) und den jeweiligen optischen Speicherschichten (2) enthält.

2. Optische Speichereinrichtung nach Anspruch 1, dadurch gekennzeichnet, daß der Silikongummi vom Typ mit Aushärtung bei Raumtemperatur, vom Typ mit Thermofizierung oder vom Typ mit Aushärtung bei ultravioletter Bestrahlung ist.

3. Optische Speichereinrichtung nach Anspruch 1 oder 2, dadurch gekennzeichnet, daß die Bondschicht (4) eine Dicke von 10 µm bis 150 µm aufweist.

4. Optische Speichereinrichtung nach einem der Ansprüche 1 bis 3, dadurch gekennzeichnet, daß die harte Belagschicht eine ausgehärtete Harzschicht (3) enthält.

5. Optische Speichereinrichtung nach Anspruch 4, dadurch gekennzeichnet, daß die gehärtete Harzschicht (3) aus einem bei ultravioletter Bestrahlung aushärtendem Harz gebildet ist.

6. Optische Speichereinrichtung nach Anspruch 5, dadurch gekennzeichnet, daß das bei ultravioletter Bestrahlung aushärtende Harz vom Acrylattyp ist.

7. Optische Speichereinrichtung nach einem der Ansprüche 4 bis 6, dadurch gekennzeichnet, daß die gehärtete Harzschicht (3) eine Dicke von mehreren bis mehreren 10 Mikrometern aufweist.

8. Optische Speichereinrichtung nach einem der vorhergehenden Ansprüche, dadurch gekennzeichnet, daß die optische Speicherschicht (2) eine Mehrschichtstruktur mit einem dielektrischen Film, einem Magnetfilm und einem Reflexionsfilm enthält.

9. Optische Speichereinrichtung nach einem der vorhergehenden Ansprüche, dadurch gekennzeichnet, daß das lichtdurchlässige Substrat (1) aus einem lichtdurchlässigen Harz besteht.

10. Optische Speichereinrichtung nach einem der vorhergehenden Ansprüche, dadurch gekennzeichnet, daß der Silikongummi ein bei Raumtemperatur aushärtender Silikongummi oder vom Typ mit Dealkoholisierungskondensation ist.

## Revendications

1. Dispositif optique de mémoire comprenant une paire d'éléments optiques de mémoire assemblés face à face par une couche de jonction (4), chaque élément comprenant un substrat transmettant la lumière (1) et une couche optique de mémoire (2) sur le substrat, lesdits éléments étant disposés avec lesdites couches de mémoire (2) entre la couche de jonction (4) et les substrats correspondants (1), dans lequel la couche de jonction (4) comprend un caoutchouc aux silicones, caractérisé en ce que le dispositif comprend en outre des couches dures correspondantes de revêtement (3) entre la couche de jonction (4) et les couches optiques correspondantes de mémoire (2).

2. Dispositif optique de mémoire selon la revendication 1, dans lequel le caoutchouc aux silicones est un caoutchouc durci de type à température ambiante, de type thermodurcissable ou de type durcissant aux ultraviolets.

3. Dispositif optique de mémoire selon la revendication 1 ou la revendication 2, dans lequel la couche de jonction (4) a une épaisseur de 10 µm à 150 µm.

4. Dispositif optique de mémoire selon l'une quelconque des revendications 1 à 3, dans lequel la couche dure de revêtement comprend une couche durcie de résine (3).

5. Dispositif optique de mémoire selon la revendication 4, dans lequel la couche durcie de résine (3) est fabriquée dans une résine durcissant aux ultraviolets.

6. Dispositif optique de mémoire selon la revendication 5, dans lequel la résine durcissant aux ultraviolets est d'un type à l'acrylate.

7. Dispositif optique de mémoire selon l'une quelconque des revendications 4 à 6, dans lequel la couche durcie de résine (3) a une épaisseur de quelques unités à plusieurs dizaines de micromètres.

8. Dispositif optique de mémoire selon l'une quelconque des revendications précédentes, dans lequel la couche optique de mémoire (2) a une structure à couches multiples comprenant un film diélectrique, un film magnétique et un film réfléchissant.

9. Dispositif optique de mémoire selon l'une quelconque des revendications précédentes, dans lequel le substrat transmettant la lumière (1) est fabriqué dans une résine transmettant la lumière.

10. Dispositif optique de mémoire selon l'une quelconque des revendications précédentes, dans lequel le caoutchouc aux silicones est un caoutchouc aux silicones durcissant à température ambiante d'un type à condensation par désalcoolation.
